# EUROPEAN PATENT APPLICATION

(11) **EP 4 685 663 A1**
(43) Date of publication of application: **28.01.2026**
(21) Application number: 24787813.5
(22) Date of filing: 23.02.2024
(51) Int. Cl.: G06F 16/29, G06F 16/172, G06T 7/11

(54) **IMAGE FILE GENERATION METHOD AND APPARATUS, AND IMAGE PROCESSING METHOD AND APPARATUS**

(30) Priority: 12.04.2023 CN 202310391194; 29.06.2023 CN 202310786240
(71) Applicant: Huawei Cloud Computing Technologies Co., Ltd., Guizhou 550025 (CN)
(72) Inventor: SHEN, Dannan, Gui'an New District, Guizhou 550025 (CN); WEI, Xin, Gui'an New District, Guizhou 550025 (CN); KANG, Yifei, Gui'an New District, Guizhou 550025 (CN)
(74) Representative: Maiwald GmbH
(86) International application number: PCT/CN2024/078220
(87) International publication number: WO 2024/212707

(57) **Abstract**

This application provides an image file generation method, an image processing method, and an apparatus. The image file generation method includes: receiving data of a first image; segmenting the data of the first image to generate a plurality of tiles; and generating a first image file based on the plurality of tiles. The first image file includes: a first data structure area, configured to store a file header of the image file; a second data structure area, configured to store data of a second image, where the data of the second image includes a plurality of tiles; and a third data structure area, configured to store offsets of the plurality of tiles in the data of the second image. Based on the methods, a terminal device can request a tile corresponding to a target image, and does not need to fully download an original image. This helps alleviate a problem of slow loading of a cloud image and improve browsing efficiency.

## Description

This application claims priorities to Chinese Patent Application No. 202310391194.1, filed with the China National Intellectual Property Administration on April 12, 2023 and entitled "FILE GENERATION METHOD, APPARATUS, AND SYSTEM", and to Chinese Patent Application No. 202310786240.8, filed with the China National Intellectual Property Administration on June 29, 2023 and entitled "IMAGE FILE GENERATION METHOD, IMAGE PROCESSING METHOD, AND APPARATUS", both of which are incorporated herein by reference in their entireties.

### TECHNICAL FIELD

This application relates to the field of image processing, and more specifically, to an image file generation method, an image processing method, and an apparatus.

### BACKGROUND

Using high-definition cameras to take object images is one of the most direct and effective ways to obtain data in the future digital twin scenario. Currently, massive ultra-large image data is involved in various fields, and the image data is characterized by multi-source heterogeneity, a large size, a complex type, and the like. To store massive image raster data, cloud storage-based services gradually become a trend in the industry. Therefore, the image raster data such as images may be stored on a cloud server, and image browsing on a device side can be achieved by transmitting a cloud-stored image to the device side.

### SUMMARY

This application provides an image file generation method, an image processing method, and an apparatus. An image file includes a tile obtained through segmentation based on an original image and an offset indicating a location of the tile, so that a terminal device can request a tile corresponding to a target image, and does not need to fully download the original image. This helps alleviate a problem of slow loading of a cloud image and improve browsing efficiency.

According to a first aspect, an image file generating method is provided, including: obtaining data of a first image, where the data of the first image includes map data; segmenting the first image to generate a plurality of tiles; and generating a first image file based on the plurality of tiles, where the first image file includes: a first data structure area, configured to store a file header of the first image file, where the file header indicates a file type of the first image file; a second data structure area, configured to store data of a second image, where the data of the second image includes data of the plurality of tiles; and a third data structure area, configured to store offsets of the plurality of tiles, where the offsets of the plurality of tiles indicate storage locations of the data of the plurality of tiles in the second data structure area.

Based on the foregoing embodiment, the method for generating an image file including the foregoing data structure areas is provided, so that only a tile corresponding to a target image can be requested, and an original image does not need to be fully downloaded. This helps alleviate a problem of slow loading of a cloud image and improve browsing efficiency.

With reference to the first aspect, in some implementations of the first aspect, the method further includes resampling the plurality of tiles to generate a multi-level tile, where the second image includes the multi-level tile. Based on the foregoing embodiment, the multi-level tile is provided, to help request different levels of tiles based on zooming and improve image browsing experience.

With reference to the first aspect, in some implementations of the first aspect, for a plurality of homogeneous tiles in the plurality of tiles, the data of the second image in the second data structure area includes data of a feature tile in the plurality of homogeneous tiles, and the plurality of homogeneous tiles are a plurality of tiles whose proportions of same pixels with the feature tile reach a predetermined threshold.

With reference to the first aspect, in some implementations of the first aspect, offsets that correspond to the plurality of homogeneous tiles and that are stored in the third data structure area are the same, and the same offsets of the plurality of homogeneous tiles indicate a storage location of the feature tile in the second data structure area. Based on the foregoing embodiment, tile reuse is implemented, thereby effectively saving storage space.

With reference to the first aspect, in some implementations of the first aspect, the third data structure area is adjacent to the first data structure area in the first image file. Based on this embodiment, data read efficiency is improved.

With reference to the first aspect, in some implementations of the first aspect, the third data structure area includes a tag, and the tag includes an index code and an offset that are of each tile in the second image. Based on the foregoing embodiment, it is convenient to search the third data structure area for an offset based on a index code, and then locate the tile of the target image based on the offset. This helps improve search efficiency.

With reference to the first aspect, in some implementations of the first aspect, the data of the second image further includes the first image and/or a first thumbnail, and the first thumbnail includes an image obtained through resampling based on the first image; and the third data structure area further includes an offset corresponding to the first image and/or the first thumbnail.

Based on the foregoing embodiment, the second image in the first image file is set to further include the original image, so that the first image file can be better compatible with an existing TIFF format file; and image data of the first image file is set to further include the first thumbnail, which facilitates image browsing and processing based on the first thumbnail. In addition, in comparison with additionally storing a thumbnail or a tile pyramid independent of the original image, storing the three in the image data of the first image file can further reduce file input/output frequency and improve read/write efficiency.

With reference to the first aspect, in some implementations of the first aspect, the first thumbnail includes a multi-level thumbnail, and the multi-level thumbnail includes a plurality of images having different resolutions obtained by performing resampling a plurality of times based on the first image. Based on the foregoing embodiment, the multi-level thumbnail is provided, to help request different levels of thumbnails based on zooming and improve image browsing experience.

With reference to the first aspect, in some implementations of the first aspect, the first image file further includes a fourth data structure area, where the fourth data structure area is configured to store specific attributes of the plurality of tiles, and a size of the specific attribute is greater than a specific threshold.

With reference to the first aspect, in some implementations of the first aspect, the method further includes:
defining a projection coordinate system for the first image;
defining a coordinate reference level for the first image based on the projection coordinate system; and
segmenting the first image based on the coordinate reference level to obtain the plurality of tiles.

According to a second aspect, an image processing method is provided. The method includes: receiving a first data request from a terminal device, where the first data request is used to request data of a first target image in a first image file, the first image file includes a second data structure area, the second data structure area includes data of a second image, the second image includes a plurality of tiles, the plurality of tiles include an image obtained through segmentation based on a first image, and the first target image includes one or more tiles in the second image; obtaining the data of the first target image from the first image file based on the first data request; and sending the data of the first target image to the terminal device.

Based on the foregoing embodiment, a server receives the first data request sent by the terminal device, and then the server obtains, based on the first data request, the one or more tiles included in the first target image, and sends the tiles to the terminal device, so that an original image does not need to be fully downloaded. This can significantly alleviate a problem of slow loading of a cloud image, improve browsing efficiency, and further reduce a data transmission amount.

With reference to the second aspect, in some implementations of the second aspect, the second image includes a multi-level tile, and the multi-level tile includes a plurality of different levels of tiles obtained by performing resampling a plurality of times based on the plurality of tiles; and the first target image specifically includes one or more tiles at a same level in the multi-level tile. Based on the foregoing embodiment, a plurality of tiles at one level may be requested by using one request, which helps reduce transmission overheads.

With reference to the second aspect, in some implementations of the second aspect, the first image file further includes a third data structure area, the third data structure area includes offsets of data of the plurality of tiles in the second image, and the offsets indicate storage locations of the data of the plurality of tiles in the second data structure area.

With reference to the second aspect, in some implementations of the second aspect, for a plurality of homogeneous tiles in the plurality of tiles, the data of the second image in the second data structure area includes data of a feature tile in the plurality of homogeneous tiles, and the plurality of homogeneous tiles are a plurality of tiles whose proportions of same pixels with the feature tile reach a predetermined threshold.

With reference to the second aspect, in some implementations of the second aspect, offsets that correspond to the plurality of homogeneous tiles and that are stored in the third data structure area are the same, and the same offsets of the plurality of homogeneous tiles indicate a storage location of the feature tile in the second data structure area. Based on the foregoing embodiment, tile reuse is implemented, thereby effectively saving storage space.

With reference to the second aspect, in some implementations of the second aspect, the obtaining the data of the first target image from the first image file based on the first data request includes: determining the first target image based on the first data request; determining, based on the first target image, a first tile corresponding to the first target image; obtaining a first offset, where the first offset is an offset of the first tile; and obtaining data of the first tile based on the first offset. The sending the data of the first target image to the terminal device includes: sending the data of the first tile to the terminal device.

With reference to the second aspect, in some implementations of the second aspect, the first data request includes a first offset, and the first offset is an offset of a first tile corresponding to the first target image. The obtaining the data of the first target image from the first image file based on the first data request includes: obtaining the first tile based on the first offset. The sending the data of the first target image to the terminal device includes: sending data of the first tile to the terminal device.

Based on the foregoing solution, the first data request may include the first offset to request the first target image, and the server does not need to search the third data structure area for the offset corresponding to the first target image, and may directly determine a location of a required tile based on the first offset in the first data request, to help improve read efficiency. In addition, in this solution, data of a plurality of tiles may be requested by using one data request, so that transmission overheads can be reduced and browsing efficiency can be improved.

With reference to the second aspect, in some implementations of the second aspect, before receiving the first data request from the terminal device, the method further includes: receiving a second data request from the terminal device, where the second data request is used to request the third data structure area of the first image file; obtaining the third data structure area based on the second data request; and sending the third data structure area to the terminal device. Based on this solution, the terminal device may search the third data structure area for the corresponding first offset based on a set of index codes corresponding to the tiles in the first target image.

With reference to the second aspect, in some implementations of the second aspect, the first image file further includes a first data structure area, the first data structure area includes a file header of the first image file, the file header indicates a file type, and the third data structure area is adjacent to the first data structure area in the first image file. In this solution, the third data structure area can be quickly read after the first data structure area is read, which helps improve data read efficiency.

With reference to the second aspect, in some implementations of the second aspect, the third data structure area includes a tag, and the tag includes an index code and an offset that are of each tile in the second image. In this solution, an offset can be obtained by searching the third data structure area based on a index code, and then the tile of the target image is located based on the offset. This helps improve search efficiency.

With reference to the second aspect, in some implementations of the second aspect, the second image further includes the first image and/or a first thumbnail, and the first thumbnail includes an image obtained through resampling based on the first image; and the third data structure area further includes an offset corresponding to data of the first image and/or data of the first thumbnail.

Based on the foregoing embodiment, image data of the first image file is set to further include the original image, so that the first image file can be better compatible with an existing TIFF format file; and image data of the first image file is set to further include the first thumbnail, which facilitates image browsing and processing based on the first thumbnail. In addition, in comparison with additionally storing a thumbnail or a tile pyramid independent of the original image, storing the three in the image data of the first image file can further reduce file input/output frequency and improve read/write efficiency.

With reference to the second aspect, in some implementations of the second aspect, the first thumbnail includes a multi-level thumbnail, and the multi-level thumbnail includes a plurality of images having different resolutions obtained by performing resampling a plurality of times based on the first image.

With reference to the second aspect, in some implementations of the second aspect, the first image file further includes: a fourth data structure area, where the fourth data structure area is configured to store specific attributes of the plurality of tiles, and a size of the specific attribute is greater than a specific threshold.

According to a third aspect, an image processing method is provided, including: sending a first data request to a server, where the first data request is used to request data of a first target image in a first image file, the first image file includes a second data structure area, the second data structure area includes data of a second image, the second image includes a plurality of tiles, the plurality of tiles include an image obtained through segmentation based on a first image, and the first target image includes one or more tiles in the second image; receiving the data of the first target image from the server; and displaying the first target image based on the data of the first target image.

Based on the foregoing solution, a terminal device can send the first data request to the server, to request the first target image in the first image file in the server, and then the server obtains, based on the first data request, the one or more tiles included in the first target image, and sends the tiles to the terminal device, so that an original image does not need to be fully downloaded. This can significantly alleviate a problem of slow loading of a cloud image, improve browsing efficiency, and further reduce a data transmission amount.

With reference to the third aspect, in some implementations of the third aspect, the second image includes a multi-level tile, and the multi-level tile includes a plurality of different levels of tiles obtained by performing resampling a plurality of times based on the plurality of tiles; and the first target image specifically includes one or more tiles at a same level in the multi-level tile.

With reference to the third aspect, in some implementations of the third aspect, the first image file further includes a third data structure area, the third data structure area is configured to store offsets of data of the tiles in the second image, and the offsets indicate storage locations of the data of the plurality of tiles in the second data structure area.

With reference to the third aspect, in some implementations of the third aspect, for a plurality of homogeneous tiles in the plurality of tiles, the data of the second image in the second data structure area includes data of a feature tile in the plurality of homogeneous tiles, and the plurality of homogeneous tiles are a plurality of tiles whose proportions of same pixels with the feature tile reach a predetermined threshold.

With reference to the third aspect, in some implementations of the third aspect, offsets that correspond to the plurality of homogeneous tiles and that are stored in the third data structure area are the same, and the same offsets of the plurality of homogeneous tiles indicate a storage location of the feature tile in the second data structure area.

With reference to the third aspect, in some implementations of the third aspect, the first data request includes a first offset, the first offset is an offset of a first tile, and the first tile includes one or more tiles corresponding to the first target image.

With reference to the third aspect, in some implementations of the third aspect, before sending the first data request to the server, the method further includes: sending a second data request to the server, where the second data request is used to request the third data structure area of the first image file; receiving the third data structure area from the server; and determining the first offset based on the third data structure area.

With reference to the third aspect, in some implementations of the third aspect, before sending the first data request to the server, the method further includes: obtaining an image access request, where the image access request is used to request to display the first target image in the first image; and determining the first target image based on the image access request.

With reference to the third aspect, in some implementations of the third aspect, the determining the first target image includes: determining a level and pixel coordinates of the first target image based on the image access request; and determining the first target image based on the level and the pixel coordinates of the first target image.

With reference to the third aspect, in some implementations of the third aspect, the third data structure area includes a tag, and the tag includes an index code and the offset that are of each tile in the second image. The determining the first offset based on the third data structure area includes: obtaining an index code of a tile of the first target image; and searching the third data structure area based on the index code of the tile of the first target image, to determine the first offset.

With reference to the third aspect, in some implementations of the third aspect, the first image file further includes a first data structure area, the first data structure area includes a file header of the first image file, the file header indicates a file type, and the third data structure area is adjacent to the first data structure area in the first image file.

With reference to the third aspect, in some implementations of the third aspect, the data of the second image in the second data structure area further includes data of the first image and/or data of a first thumbnail, and the first thumbnail includes an image obtained through resampling based on the data of the first image; and the third data structure area further includes an offset corresponding to the data of the first image and/or the data of the first thumbnail.

With reference to the third aspect, in some implementations of the third aspect, the first thumbnail includes a multi-level thumbnail, and the multi-level thumbnail includes a plurality of images having different resolutions obtained by performing resampling a plurality of times based on the first image.

According to a fourth aspect, an image file generation apparatus is provided, where the apparatus includes: a transceiver module, configured to receive data of a first image, where the data of the first image includes map data; and a processing module, configured to segment the first image to generate a plurality of tiles. The processing module is further configured to generate a first image file based on the plurality of tiles, where the first image file includes: a first data structure area, configured to store a file header of an image file, where the file header indicates a file type; a second data structure area, configured to store data of a second image, where the data of the second image includes data of the plurality of tiles; and a third data structure area, configured to store offsets of the plurality of tiles in the data of the second image, where the offsets of the plurality of tiles indicate storage locations of data of the plurality of tiles in the data of the second image.

Based on the foregoing embodiment, the image file generation apparatus can generate an image file including the foregoing data structure areas, so that only a tile corresponding to a target image can be requested, and an original image does not need to be fully downloaded. This helps alleviate a problem of slow loading of a cloud image and improve browsing efficiency.

According to a fifth aspect, an image processing apparatus is provided, where the apparatus includes: a transceiver module, configured to receive a first data request from a terminal device, where the first data request is used to request data of a first target image in a first image file, the first image file includes a second data structure area, the second data structure area includes data of a second image, the data of the second image includes data of a plurality of tiles, the plurality of tiles include an image obtained through segmentation based on a first image, and the first target image includes one or more tiles in the second image; and a processing module, configured to obtain the data of the first target image from the first image file based on the first data request. The transceiver module is further configured to send the data of the first target image to the terminal device.

Based on the foregoing solution, the image processing apparatus can receive, through the transceiver module, the first data request sent by the terminal device, and then the processing module obtains, based on the first data request, the one or more tiles included in the first target image, and sends the tiles to the terminal device, so that an original image does not need to be fully downloaded. This can significantly alleviate a problem of slow loading of a cloud image, improve browsing efficiency, and further reduce a data transmission amount.

According to a sixth aspect, an image processing apparatus is provided, where the apparatus includes: a transceiver module, configured to send a first data request to a server, where the first data request is used to request data of a first target image in a first image file, the first image file includes a second data structure area, the second data structure area includes data of a second image, the second image includes a plurality of tiles, the plurality of tiles include an image obtained through segmentation based on data of a first image, and the first target image includes one or more tiles in the second image, where the transceiver module is further configured to receive the data of the first target image from the server; and a processing module, configured to display the first target image based on the data of the first target image.

Based on the foregoing solution, the image processing apparatus can send the first data request to the server through the transceiver module, to request the first target image in the first image file in the server, and then the server obtains, based on the first data request, the one or more tiles included in the first target image, so that an original image does not need to be fully downloaded. After the transceiver module receives data of the first target image from the server, the processing module displays the first target image based on the data of the first target image. This can significantly alleviate a problem of slow loading of a cloud image, improve browsing efficiency, and further reduce a data transmission amount.

According to a seventh aspect, a first image file is provided, where the first image file includes a first data structure area, configured to store a file header of the first image file, where the file header indicates a file type of the first image file; a second data structure area, configured to store data of a second image, where the data of the second image includes data of a plurality of tiles, and the plurality of tiles include an image obtained through segmentation based on the first image; and a third data structure area, configured to store offsets of the plurality of tiles, where the offsets of the plurality of tiles indicate storage locations of the data of the plurality of tiles in the second data structure area.

According to an eighth aspect, a computing device is provided, including a processor and a memory. The processor is configured to execute instructions stored in the memory, for the computing device to perform the method according to any one of the first aspect, or the second aspect, or the third aspect.

According to a ninth aspect, a computing device cluster is provided, including at least one computing device. Each computing device includes a processor and a memory; and the processor of the at least one computing device is configured to execute instructions stored in the memory in the at least one computing device, for the computing device cluster to perform the method according to any one of the first aspect, or the second aspect, or the third aspect.

According to a tenth aspect, a computer-readable storage medium is provided, including computer program instructions. When the computer instructions are run by a computing device cluster, the computing device cluster is enabled to perform the method according to any one of the first aspect, or the second aspect, or the third aspect.

According to an eleventh aspect, a computer program product including instructions is provided. When the instructions are run by a computing device cluster, the computing device cluster is enabled to perform the method according to any one of the first aspect, or the second aspect, or the third aspect.

According to a twelfth aspect, a cloud-side device is provided, including at least one processor. The at least one processor is coupled to at least one memory, and the at least one processor is configured to execute a computer program or instructions stored in the at least one memory, so that the cloud-side device performs the method according to any one of the first aspect or the second aspect.

According to a thirteenth aspect, a device-side device is provided, including at least one processor, where the at least one processor is coupled to at least one memory, and the at least one processor is configured to execute a computer program or instructions stored in the at least one memory, so that the device-side device performs the method according to the third aspect.

According to a fourteenth aspect, a device-cloud collaboration system is provided, including the cloud-side device according to the twelfth aspect and the device-side device according to the thirteenth aspect.

### BRIEF DESCRIPTION OF DRAWINGS

FIG. 1 is a diagram of a device-cloud collaboration system according to an embodiment of this application;
FIG. 2 is a diagram of an image processing method according to an embodiment of this application;
FIG. 3 is a diagram of an image file generation method according to an embodiment of this application;
FIG. 4 shows a TIFF image according to an embodiment of this application;
FIG. 5 is a diagram of a file structure of a TIFF image file according to an embodiment of this application;
FIG. 6 is a diagram of coordinate mapping of a TIFF image according to an embodiment of this application;
FIG. 7 is a diagram of an image resampling and segmenting process according to an embodiment of this application;
FIG. 8 is a diagram of a file structure of a first image file according to an embodiment of this application;
FIG. 9 is a diagram of a process of determining a tile of a first target image according to an embodiment of this application;
FIG. 10 is a block diagram of an image file generation apparatus according to an embodiment of this application;
FIG. 11 is a block diagram of an image processing apparatus according to an embodiment of this application;
FIG. 12 is a block diagram of a structure of a computing device according to an embodiment of this application;
FIG. 13 is a block diagram of a structure of a computing device cluster according to an embodiment of this application; and
FIG. 14 is a block diagram of a structure of another computing device cluster according to an embodiment of this application.

### DESCRIPTION OF EMBODIMENTS

The following describes technical solutions of this application with reference to accompanying drawings.

A device-side device in embodiments of the present invention may also be referred to as a terminal device, user equipment (User Equipment, UE), a mobile station (Mobile Station, MS), a mobile terminal (Mobile Terminal), or the like. The device-side device may be, for example, a mobile phone (or referred to as a "cellular" phone) or a computer having a mobile terminal. For example, the device-side device may be a portable, pocket-sized, handheld, computer built-in, or vehicle-mounted mobile apparatus.

In embodiments of the present invention, a cloud-side device may be a server or a server cluster, and the cloud-side device may also be referred to as a computing node or a cloud-side computing cluster.

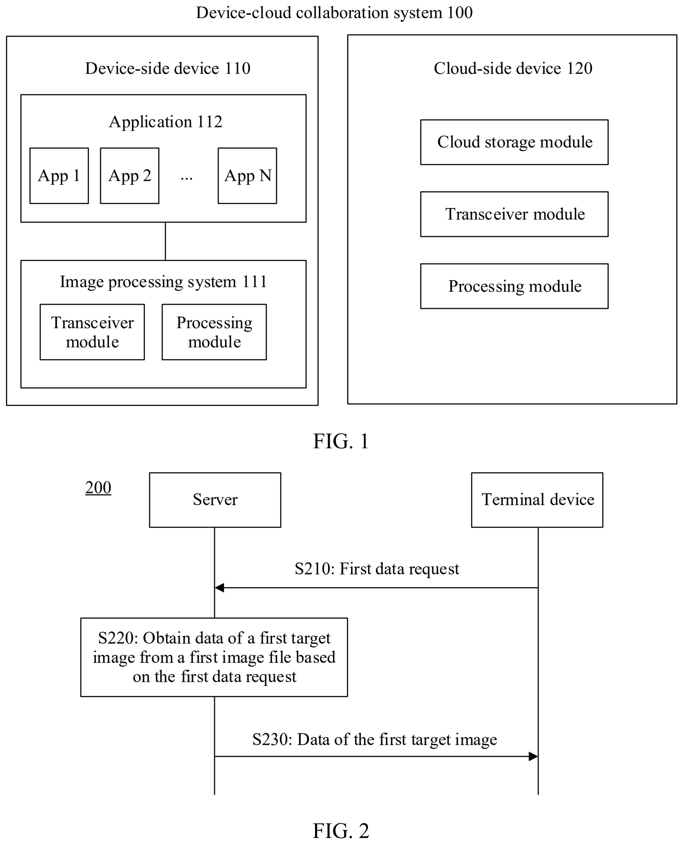

For ease of understanding and description of an image processing method according to embodiments of the present invention, the following first describes, with reference to FIG. 1, a device-cloud collaboration system 100 according to an embodiment of this application.

As shown in FIG. 1, the device-cloud collaboration system 100 includes a device-side device 110 and a cloud-side device 120. The device-side device 110 includes an image processing system 111 and an application 112 (App 1, App 2, ..., and App N). The image processing system 111 includes a transceiver module and a processing module. The transceiver module is configured to send an image data request or receive image data. The cloud-side device 120 includes a cloud storage module, a transceiver module, and a processing module. The cloud storage module is configured to store the image data.

The following describes related terms in embodiments of this application.
1. Raster image: The raster image may also be referred to as a bitmap image or a dot matrix image, and is an image formed using a pixel as a smallest unit, and is usually obtained through photographing, scanning, image shooting, and the like. A file format includes BMP, GIF, JPG, TIFF, and the like. The raster image is widely applied to various fields such as satellite remote sensing, astronomical observation, biomedicine, and land management.
2. Tile: The tiles are some small images obtained by uniformly and seamlessly segmenting an image according to a fixed specification (for example, 256*256). A process of segmenting an image into tiles is called image tiling.
3. Tile pyramid: The tile pyramid, also known as an image pyramid, is formed by tiles at different levels. In this application, the tile pyramid may also be referred to as a multi-level tile, and is a multi-resolution hierarchical model. Each tile is identified by "a level number, a row number, and a column number". The level means a level of a resolution. A higher level indicates a higher image resolution of a tile, and the tile is clearer.
4. Thumbnail: The thumbnail is a small image obtained by proportionally resampling a large image. The thumbnail and an original image have similar visual effects in addition to different file sizes. Usually, there may be various thumbnails with different resolutions based on different zooming degrees.
5. Homogeneous area: A large-scale area with a consistent color pattern is referred to as the homogeneous area, for example, a geographical large-scale snow mountain, desert, or ocean area.

The foregoing briefly describes the related terms in this application. Details are not described again in the following embodiments. In addition, the foregoing descriptions of the terms are merely descriptions for ease of understanding, and do not limit the protection scope of embodiments of this application.

In a current cloud architecture, most information systems use a browser/server (Browser/Server, B/S) architecture. In a design of the B/S architecture, displaying a cloud image on a device side mainly depends on a network (Web) transmission technology. To be specific, after the cloud image that needs to be displayed is transmitted to the device side through Web, the device side renders a part of the image based on a screen range. However, when a data amount of the image is large and a user frequently performs a pan operation, a zoom operation, or the like, the device side sends a large number of requests, and each request requires transmitting an original image. This leads to abnormally slow loading of the cloud image, making it difficult to efficiently browse a large cloud image.

In view of this, this application provides a solution, to alleviate a problem that it is difficult to efficiently browse a cloud image on a device side.

FIG. 2 is a diagram of an image processing method 200 according to an embodiment this application. The method may be applied to the device-cloud collaboration system shown in FIG. 1. However, this embodiment of this application is not limited thereto.

The method includes the following steps.

S210: A terminal device sends a first data request to a server.

The terminal device may send the first data request to the server, where the first data request may be used to request data of a first target image in a first image file.

The first target image may be an image that the terminal device needs to browse. The first image file may include a second data structure area, the second data structure area may be used to store data of a second image, and the second image may include a plurality of tiles obtained through segmentation based on a first image. In this embodiment of this application, the first target image may include one or more tiles in the second image. It may be understood that the first image may be an original image, and the first image in the following may also be referred to as the original image. This is not limited herein. For example, data of the first image may include map data.

In some implementations, the second image in the second data structure area may include a multi-level tile, and the multi-level tile may specifically include a plurality of different levels of tiles obtained by performing resampling a plurality of times based on the plurality of tiles. Based on the foregoing embodiment, the multi-level tile is provided, to help request different levels of tiles based on zooming and improve image browsing experience.

In some implementations, the first image file may further include a third data structure area, the third data structure area may be configured to store offsets of data of the plurality of tiles in the second image, and the offsets indicate storage locations of the data of the plurality of tiles in the second data structure area.

In some implementations, the first image file may further include a first data structure area, the first data structure area may be configured to store a file header of the first image file, and the file header identifies or indicates a file type.

Optionally, the first data request may be an HTTP range (GET Range) request.

Correspondingly, the server may receive the first data request from the terminal device. Optionally, the first image file may be stored in the server. After receiving the first data request from the terminal device, the server may obtain the data of the first target image from the first image file based on the first data request.

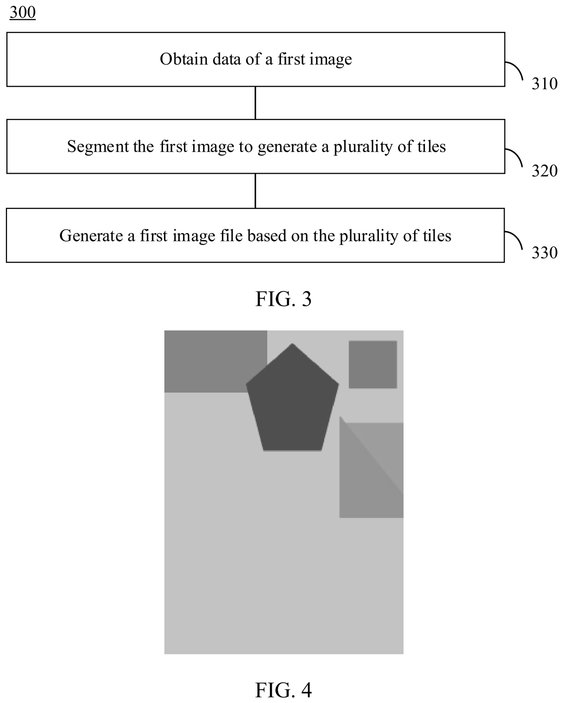

Optionally, before receiving the first data request from the terminal device, the server may generate the first image file. This application provides an image file generation method 300, as shown in FIG. 3, and the method includes the following steps.

S310: Obtain data of a first image.

S320: Segment the first image to generate a plurality of tiles.

S330: Generate a first image file based on the plurality of tiles.

Specifically, the first image file may include:
a first data structure area, where the first data structure area is configured to store a file header of an image file; and
the file header may identify or indicate a file type; in some implementations, the file header of the image file may be the same as a file header of an original image, so that the image file can be compatible with a format of the original image; and optionally, the file header of the original image may be directly extracted as the file header of the image file;
a second data structure area, where the second data structure area is configured to store data of a second image, and the data of the second image includes data of the plurality of tiles; and
a third data structure area, where the third data structure area may be configured to store offsets of data of the plurality of tiles in the second image.

Based on the embodiment of the image file generation method, the image file including the data structure areas is provided, so that only a tile corresponding to a target image can be requested, and the original image does not need to be fully downloaded. This helps alleviate a problem of slow loading of a cloud image and improve browsing efficiency.

In some implementations, the second image may include a multi-level tile. In step S330, a projection coordinate system may be first defined for the original image, and then a coordinate reference level is defined based on the projection coordinate system. Further, the original image may be segmented and resampled based on the coordinate reference level, to obtain the multi-level tile. Specifically, the plurality of tiles obtained through segmentation based on the original image may be resampled a plurality of times based on the coordinate reference level, to obtain the multi-level tile.

In some implementations, the first image file may further include a fourth data structure area, and the fourth data structure area may be configured to store a specific attribute of the second image. Optionally, a size of the specific attribute is greater than a specific threshold.

In a specific embodiment of this application, the first data structure area may be described as a "file header", the second data structure area may be described as "image data", the third data structure area may be described as an "image attribute directory", and the fourth image attribute may be described as an "attribute value". Details are not described below again. It should be understood that the following is merely an example provided for ease of description and understanding, and should not constitute any limitation on the technical solutions.

The following describes the image file generation method with reference to specific embodiments.

For example, a format of the first image file may be named an RM-TIFF format. In some embodiments, the format of the original image may be a tag image file format (Tag Image File Format, TIFF). For example, a suffix of the original image file may include tif, tiff, TIF, and TIFF. A TIFF format image file generally includes a file header (Image File Header, IFH), image data, an image attribute directory (Image File Directory, IFD), and an attribute value. It should be noted that one TIFF file may store a plurality of images, that is, there may be one or more pieces of image data, and the image data and the IFD appear in pairs. In other words, each piece of image data corresponds to one or more IFDs.

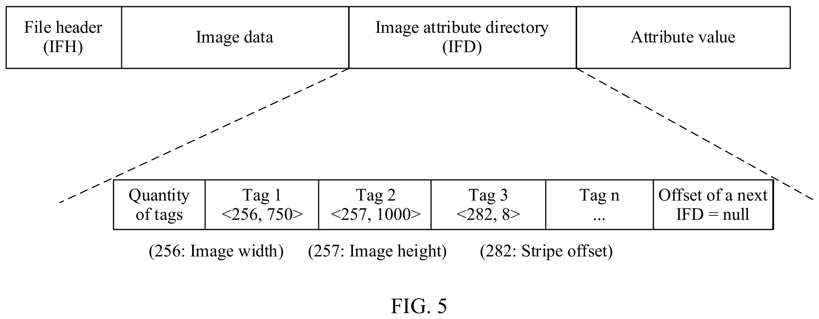

For ease of understanding embodiments of this application, FIG. 4 provides a TIFF image according to an embodiment of this application. The TIFF image is opened as shown in FIG. 4. The TIFF image has a width of 750 pixels and a height of 1000 pixels. FIG. 5 is a diagram of a file structure of an image file of the TIFF image shown in FIG. 4. As shown in FIG. 5, the image file of the TIFF format image includes an IFH, image data, an IFD, and an attribute value. Because the image in this embodiment is not large, only one piece of image data is included, and an attribute in the image is recorded by using one IFD.

An image file in the TIFF format usually starts with an 8-byte IFH. The IFH may include a sequence flag bit, a TIFF flag bit, and an offset of a first IFD. The sequence flag bit occupies 2 bytes (Bytes), the TIFF flag bit occupies 2 bytes, and the offset of the first IFD occupies 4 bytes. The offset of the first IFD may indicate a location of the first IFD corresponding to first image data.

The IFD can record the attribute in the image. Specifically, the IFD includes a quantity of tags, tags, and an offset of a next IFD. The quantity of tags occupies 2 bytes and records a total quantity of subsequent tags. Each tag occupies 12 bytes and indicates an attribute of the image. The interior of the tag can be further divided into a number of the tag (2 bytes), a value type (2 bytes), a value quantity (4 bytes), and data or an offset (4 bytes). If a byte length of the value type multiplied by the value quantity is less than or equal to 4 bytes, the data can be directly stored in the tag. Otherwise, the data can be stored in the attribute value at the end of the TIFF format, and the offset is recorded in the tag. At the end of the IFD, there is the offset of the next IFD. If the next IFD does not exist, the offset may be NULL (0x00000000). In the IFD, numbers of tags are arranged in ascending order. The numbers are defined in a TIFF specification. For example, a tag with a number of 256 represents an image width, and a tag with a number of 282 represents an offset of stripe data. For a stripe (stripe), continuous data is divided into data blocks, and each data block is stored in a different location. In the image file shown in FIG. 5, a tag 3 points to a location, in the TIFF file, of the image data of the TIFF image.

In some implementations, the format of the original image may also be a geographic tag image file format (Geo Tag Image File Format, GeoTIFF). GeoTIFF is an extended format of the tag image file format (Tag Image File Format, TIFF). To be specific, some geographic tags (Geo Tag) are defined based on the TIFF to define and store various coordinate systems, ellipsoidal datum, projection information, and the like, so that image data and geographic data are stored in a same image file, to help production and use of an image with geographic information. For example, the geographic information may be information such as a coordinate system and longitude and latitude. GeoTIFF-based image processing defines a standard coordinate system for the image, which facilitates subsequent format conversion.

Specifically, in step S310, the file header IFH of the original image may be first extracted as the file header of the first image file. Optionally, the format of the original image may be verified first, to verify whether the format is a correct TIFF format or GeoTIFF format. For example, whether the image is in the correct TIFF format may be verified by using a third-party library, for example, libtiff. For example, whether the image is in the GeoTIFF format may be verified by using the third-party library like GDAL or OpenCV.

In some implementations, the original image may be further resampled to obtain a first thumbnail. The first thumbnail may include a multi-level thumbnail, and the multi-level thumbnail includes a plurality of images having different resolutions obtained by performing resampling a plurality of times based on the original image. The multi-level thumbnail may alternatively be generated based on the coordinate reference level.

In this embodiment of this application, when the second data structure area in the first image file is generated in step S330, the first thumbnail and/or the original image may also be stored in the second data structure area. Based on the foregoing embodiment, the original image is stored in the second data structure area of the first image file, so that the first image file can be better compatible with the existing TIFF format file. The first thumbnail is stored in the second data structure area of the first image file, which can facilitate image browsing and processing based on the first thumbnail. In addition, in comparison with additionally storing a thumbnail or a tile pyramid independent of the original image, storing the three in the second data structure area of the first image file helps reduce file input/output (I/O) frequency and improve read/write efficiency.

Optionally, in step S330, an offset of data of the first thumbnail and/or the original image in the second data structure area may also be stored in the third data structure area. Further, the image attribute in the IFD of the original image may also be stored in the third data structure area.

In some implementations, the image attribute in the IFD of the original image may be extracted and stored in a memory. For example, the original image may be the TIFF image shown in FIG. 4, and the image attribute in the IFD of the original image may be the image width, the image height, the stripe offset, and the like of the original image shown in FIG. 5.

In some embodiments, a data structure like a Map structure may be used to temporarily store the extracted IFH of the original image, the IFD of the original image, and the image data of the original image for subsequent use. In some other embodiments, the extracted IFH of the original image, the IFD of the original image, and the image data of the original image may be directly stored in the file for persistent use.

The following describes, with reference to a specific embodiment, the definition of the projection coordinate system and the coordinate reference level in step S330, and the segmentation and resampling performed based on the original image based on the coordinate reference level.

### (1) Define the projection coordinate system

Specifically, when the format of the original image is the TIFF format, the original image in the TIFF format may be first converted into the GeoTIFF format.

An image file in the GeoTIFF format includes geographic data, and a geographic coordinate system is defined based on the geographic data. It may be understood that the geographic coordinate system is a spatial spherical coordinate system, and the projection coordinate system is a plane coordinate system. A process of converting spherical coordinates into plane coordinates is referred to as projection.

In some implementations, the geographic coordinate system and the projection coordinate system are defined for the image in the GeoTIFF format, that is, each pixel in the GeoTIFF format may correspond to one geographic coordinate and one projection coordinate.

In some other implementations, if only the geographic coordinate system is defined for the image in the GeoTIFF format, the projection coordinate system needs to be defined based on the geographic coordinate system.

In embodiments of this application, defining the projection coordinate system may be understood as converting spherical coordinates into plane coordinates. For example, the projection coordinate system may be defined by using a DefineProjection_management method of an arcpy script. It should be noted that defining the projection coordinate system does not change geometric information of the image, but only updates the coordinate system. Therefore, display of the image is not distorted. For example, the projection coordinate system may be defined as a spherical Mercator coordinate system (which may also be referred to as a "Web Mercator coordinate system"), and projection may be performed according to a projection standard EPSG:3857.

In some implementations, pixel coordinates of the original image may be directly mapped to projection coordinates. Specifically, a width and a height of a TIFF image may be mapped to coordinates in a two-dimensional plane coordinate system, and the coordinates are used as projection coordinates of the image.

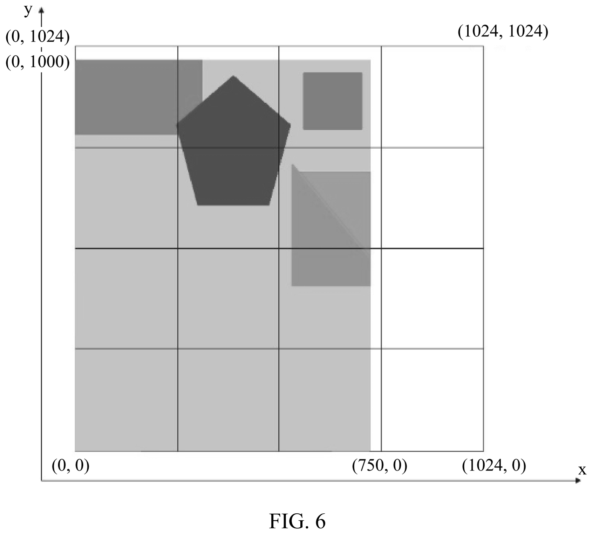

For example, FIG. 6 is a diagram of coordinate mapping of the TIFF image shown in FIG. 4. It is known that a resolution of the TIFF image shown in FIG. 4 is 750*1000, and a lower left corner of the TIFF image may be set to an origin (0, 0) of a coordinate system of projection coordinates, so that coordinates of an upper right corner of the TIFF image are (750, 1000). FIG. 6 is a diagram of projection coordinates after the TIFF image is mapped.

### (2) Define the coordinate reference level

In some implementations, the coordinate reference level may be defined based on the projection coordinate system of the original image, to facilitate generation of the multi-level thumbnail and the multi-level tile. In addition, the coordinate reference level corresponds to a level in the multi-level thumbnail and the multi-level tile. Generally, a resolution at a maximum zoom level during image browsing does not exceed an original resolution of the image, and resolutions at adjacent levels are in a 2-fold relationship.

For example, it is assumed that a length and a width of a tile are both 256 pixels. In a tile pyramid, 1*1 tiles are used to represent an image at a level 0, 2*2 tiles are used to represent an image at a level 1, and 4*4 tiles are used to represent an image at a level 2. By analogy, a tile and level correspondence shown in Table 1 may be obtained.

**Table 1 Tile and level correspondence in an embodiment of this application**

| Pyramid level | Quantity of tiles | Maximum pixel range that can be represented |
|---|---|---|
| 0 | 1 | 256*256 |
| 1 | 4 | 512*512 |
| 2 | 16 | 1024*1024 |
| 3 | 64 | 2048*2048 |
| ... | ... | ... |
| 15 | 1,073,741,824 | 8,388,608*8,388,608 |
| 16 | 4,294,967,296 | 16,777,216*16,777,216 |
| 17 | 17,179,869,184 | 33,554,432*33,554,432 |
| 18 | 68,719,476,736 | 67,108,864*67,108,864 |

According to Table 1, the level 18 of the pyramid can represent an image in a maximum pixel range of 67,108,864*67,108,864. An image beyond this range may be further divided. When the TIFF image shown in FIG. 4 is used as the original image, a size of the image is 750*1000, so that the image may be represented by using the level 2 whose pixel range is 1024*1024 in the tile pyramid. A pyramid level at which the image is located is the level 2, and covered by 12 tiles.

Based on the defined coordinate reference level, the multi-level tile may be obtained through segmentation and resampling based on the original image; and the multi-level thumbnail may also be obtained through resampling based on the original image. The segmentation may also be referred to as cropping. For example, segmentation and resampling may be completed by using a third-party library like GDAL or OpenCV.

### (3) Perform segmentation and resampling based on the original image

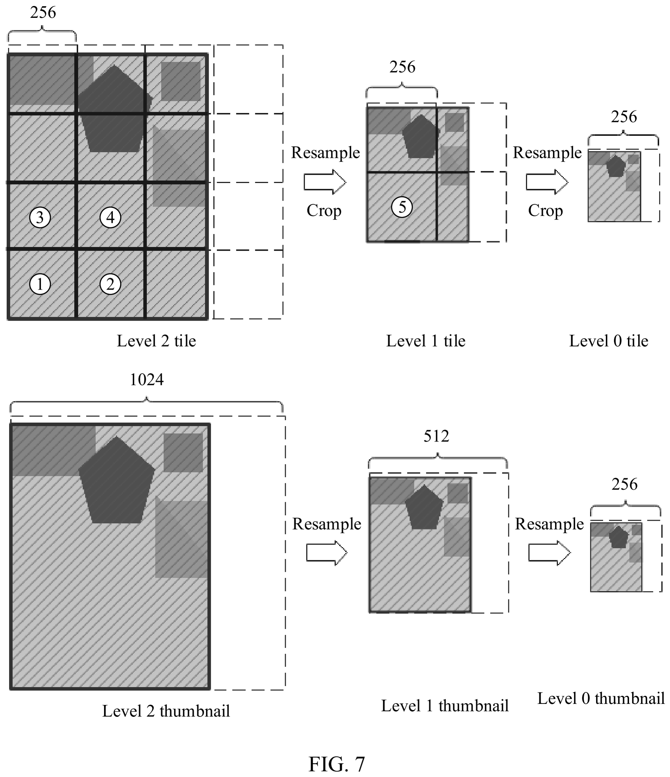

The following describes a resampling and segmentation process with reference to a specific embodiment. FIG. 7 is a diagram of the resampling and segmenting process according to an embodiment of this application. An original image used in the resampling and segmentation process is the TIFF image in FIG. 4. For example, in this embodiment, both a length and a width of a tile are 256 pixels.

As shown in FIG. 7, a multi-level tile obtaining process is as follows: segmenting an original image with a resolution of 750*1000 to obtain 12 level 2 tiles; resampling the 12 level 2 tiles to obtain four level 1 tiles, for example, resampling four level 2 tiles marked as ①, ②, ③, and ④ in the figure to obtain one level 1 tile marked as ⑤ in the figure; and resampling the four level 1 tiles to obtain one level 0 tile.

A multi-level thumbnail obtaining process is as follows: directly using an original image with a resolution of 750*1000 as a level 2 thumbnail; resampling the level 2 thumbnail to obtain one level 1 thumbnail with a resolution of 375*500; and resampling the level 1 thumbnail to obtain one level 0 thumbnail.

Specifically, in step S330, the obtained multi-level thumbnail and multi-level tile may be encoded in a unified manner, and an index code and an offset that are of each image are correspondingly stored in the third data structure area. For example, encoding may be performed by using a geohash method, or another encoding method like a user-defined encoding method. This is not limited in this application. For example, in the embodiment shown in FIG. 7, the geohash method may be used to perform z-shaped sequential encoding on the tiles. Index codes of the tiles numbered ①, ②, ③, and ④ in the level 2 tiles are 0000, 0001, 0010, and 0011 respectively, and an index code of the tile numbered ⑤ in the level 1 tiles is 00. Based on the foregoing embodiment, it is convenient to determine the offset based on a index code, and then locate the tile of the target image based on the offset.

In some implementations, an index code and an offset that are of a thumbnail may be stored in one tag in the third data structure area. When there are a large quantity of thumbnails, codes and offsets of the thumbnails may alternatively be correspondingly stored in a plurality of tags in the third data structure area. Similarly, codes and offsets of tiles may also be stored in one or more tags in the third data structure area. For example, in this embodiment of this application, all offsets of the level 0 thumbnail to the level 2 thumbnails are stored in one tag.

In conclusion, the first image file may be generated based on the original image.

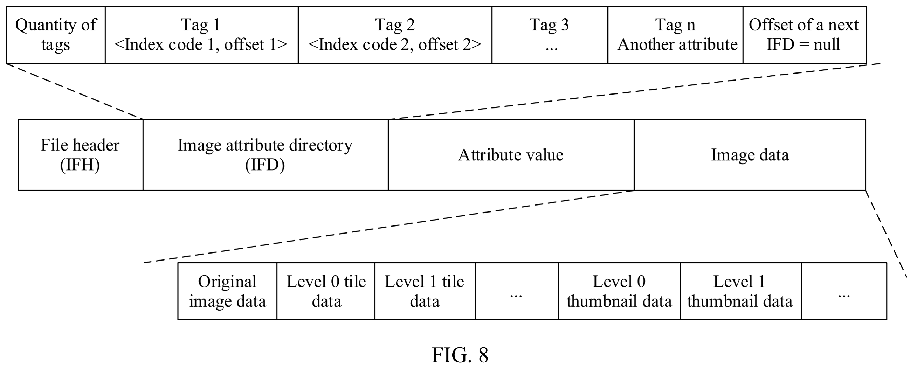

FIG. 8 is a diagram of a file structure of a first image file according to an embodiment of this application. Refer to FIG. 8. The first image file includes an IFH, an IFD, an attribute value, and image data. In the IFD, a tag 1 to a tag n are attribute information of an original image, for example, an image width, an image height, and a stripe offset; a tag n+1 to a tag m are coordinate information; a tag m+1 to a tag k are offsets of the original image; and other subsequent tags are used to store offsets of thumbnails and tiles.

In some implementations, area detection may be performed on a tile in the first image file, to determine a homogeneous tile, where the homogeneous tile is a tile whose proportion of same pixels with a feature tile reaches a predetermined threshold. For example, during homogeneous area detection, analysis may be performed by using a method like deep learning or histogram analysis. Specifically, similarity detection may be performed on tiles, and the tiles belong to a homogeneous area if large-scale color modes of the tiles are consistent. During similarity detection, a parameter λ may be set, so that when a proportion of same or similar pixels of two tiles exceeds λ, the two tiles are considered to be homogeneous tiles. Specifically, the parameter λ may be set based on an actual requirement during application.

For a plurality of homogeneous tiles, a tile that best represents the area may be extracted as a feature tile. For example, the feature tile may be extracted through manual selection or machine learning. Image data of the first image file may include only data of the feature tile in the plurality of homogeneous tiles, in other words, data of a homogeneous tile other than the feature tile may be deleted. In addition, all offsets corresponding to the plurality of homogeneous tiles in the IFD are set to an offset of the feature tile, in other words, all the offsets of the plurality of homogeneous tiles indicate a location of the feature tile in the first image file. Based on the foregoing embodiment, tile reuse can be implemented, thereby effectively saving storage space.

In some implementations, the image data in the first image file may be compressed, to reduce occupied storage space and reduce network transmission costs. After compression, the offsets in the IFD need to be updated synchronously. For example, a compression manner may be LZM, JPEG, DEFLATE, or the like.

In some implementations, the third data structure area may be adjacent to the first data structure area. Specifically, the IFD may be adjacently disposed after the IFH in the first image file. Based on this embodiment, data read efficiency is improved. In some implementations, the attribute value and the IFD may be adjacently placed after the file header, to help read a complete image attribute can be read at a time.

Based on the foregoing embodiment, the first image file in an RM-TIFF format can be obtained by performing format conversion on the original image.

S220: The server obtains the data of the first target image from the first image file based on the first data request.

After receiving the first data request in S210, the server may obtain the data of the first target image from the first image file based on the first data request.

S230: The server sends the data of the first target image to the terminal device.

Correspondingly, the terminal device may receive the data of the first target image from the server, and display the first target image based on the data of the first target image.

Based on the foregoing embodiment, the terminal device can send the first data request to the server, to request the first target image in the first image file in the server, and then the server obtains, based on the first data request, the one or more tiles included in the first target image, and sends the tiles to the terminal device, so that the original image does not need to be fully downloaded. This can significantly alleviate a problem of slow loading of a cloud image, improve browsing efficiency, and further reduce a data transmission amount.

Before S210, the terminal device may alternatively first determine the first target image. Specifically, the terminal device may first obtain an image access request. For example, the image access request may be a pan operation, a zoom operation, or the like performed by the user, and the image access request is used to request to display the first target image in the original image.

In some implementations, the terminal device may determine the first target image based on the image access request. Specifically, the terminal device may determine a level and pixel coordinates of the first target image based on the image access request, and then determine, based on the level and the pixel coordinates of the first target image, the first target image and a tile corresponding to the first target image.

For example, a level of a tile in a window range may be determined based on the pan operation, the zoom operation, or the like performed by the user, and screen coordinates are converted into pixel coordinates; then the pixel coordinates are converted into projection coordinates, to obtain a projection coordinate range of the tile in the window range; and a set of index codes corresponding to the tiles is obtained based on the projection coordinate range of the tile. It should be noted that a same encoding manner is used for both a window on a terminal device side and an image on a server side, for example, encoding is performed by using a geohash method, so that an index code of the window on the terminal device side is unified with an index code of a corresponding tile on the server side.

In some embodiments, the first data request may include geographic information corresponding to the first target image, for example, a longitude range and a latitude range. After receiving the first data request, the server may obtain the data of the first target image from the first image file based on the first data request. Specifically, the server may determine the first target image based on the first data request; determine, based on the first target image, a first tile corresponding to the first target image, where the first tile may include one or more tiles; obtain a first offset corresponding to the first tile; and then obtain data of the first tile based on the first offset, and send the data of the first tile to the terminal device.

In some embodiments, before step S210, the terminal device may further send a second data request to the server to request the third data structure area of the first image file. Optionally, the second data request may be an HTTP GET Range request. Correspondingly, the server may receive the second data request from the terminal device, obtain the third data structure area from the first image file based on the second data request, and then send the third data structure area of the first image file to the terminal device.

Further, the terminal device may search the third data structure area for the corresponding first offset based on a set of index codes corresponding to the tiles in the first target image. It may be understood that the first offset is a set of offsets corresponding to one or more tiles in the first tile. When the first target image covers only one tile, there is one index code, and there is one corresponding offset, and the offset forms the first offset. When the first target image covers a plurality of tiles, there are a plurality of index codes, and there are a plurality of corresponding offsets, and the plurality of offsets form the first offset.

Further, the first data request may include the first offset, so that the server may directly locate the location of the data of the first target image based on the first offset. Based on the foregoing solution, the first data request may include the first offset to request the first target image, and the server does not need to search the third data structure area for the offset corresponding to the first target image, and may directly determine a location of a required tile based on the first offset in the first data request, to help improve read efficiency. In addition, in this solution, data of a plurality of tiles may be requested by using one data request, so that transmission overheads can be reduced and browsing efficiency can be improved.

The following describes, with reference to a specific embodiment, a process of determining a set of index codes corresponding to tiles in a first target image.

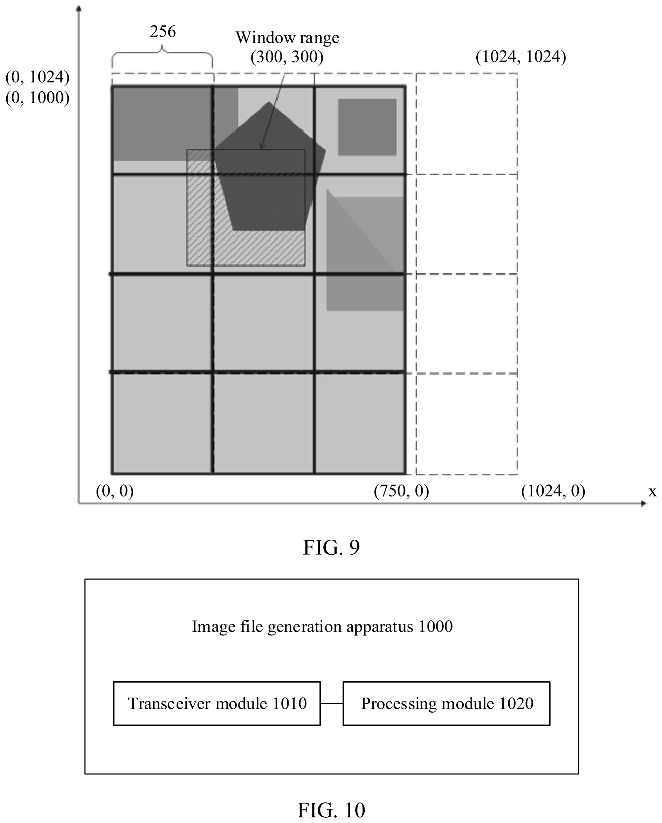

FIG. 9 is a diagram of a process of determining a tile of a first target image according to an embodiment of this application. It is assumed that an image display area (also referred to as a "window") is 300*300 pixels. A zoom level is a level 0 when a user initially loads an image. Then the zoom level changes to a level 2 after the user performs a pan operation or a zoom operation, and pixel coordinates corresponding to an upper left corner of the window of the image are (200, 200). Refer to FIG. 9. The window is located at the zoom level 2, and the pixel coordinates corresponding to the upper left corner of the window are (200, 200). In this case, a screen cannot display an entire image, and therefore tiles within a window range are requested.

In this embodiment, a process of determining an index code of the tile of the first target image is as follows:
(1) Screen coordinates may be converted into pixel coordinates. Based on the size 300*300 of the window and the pixel coordinates (200, 200) of the upper left corner, pixel coordinates of a lower right corner of the window can be calculated as (500, 500). (2) The pixel coordinates are converted into standard projection coordinates based on a projection coordinate system of the image. The origin of the pixel coordinates is in the upper left corner, and the y axis increases from top to bottom. In addition, the origin of the projection coordinates is in a lower left corner, and the y axis increases from bottom to top. Therefore, coordinate system conversion is required. The coordinates of the upper left corner of the projection coordinate system in the figure are aligned with the origin of the pixel coordinate system, so that a projection coordinate range in the window range is [200, 500] on the x axis and [524,824] on the y axis. (3) According to a geohash encoding method, the projection coordinate range is converted into a set of index codes, namely, four tiles 0100, 0101, 0110, and 0111.

In some implementations, the first target image may include a thumbnail. For example, when an image display area (also referred to as a "window") of the user is initially at a level 0, screen coordinates of an upper left corner is (0, 0), and screen coordinates of a lower right corner is (300, 300). A size of an image thumbnail at the level 0 is 256*256 pixels. Therefore, the entire image can be directly displayed by using the thumbnail. Optionally, the terminal device may retrieve the IFD to obtain a second offset corresponding to the thumbnail. Correspondingly, the first data request includes the second offset. The server may determine a location of the thumbnail based on the second offset in the first data request, and send data of the thumbnail to the terminal device.

In some implementations, the terminal device may cache the received data of the first target image. Optionally, a memory may be used for caching. When a caching requirement is large, a database may be used for caching. Subsequent same requests can be preferentially searched in a local cache to improve efficiency.

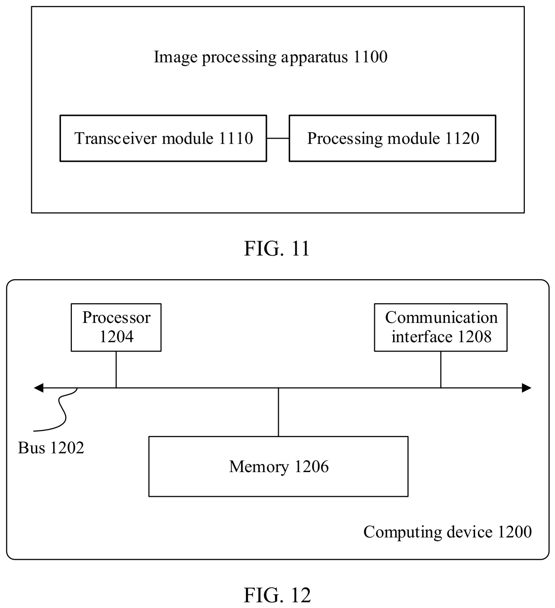

The foregoing describes in detail the method side embodiments of this application with reference to FIG. 1 to FIG. 9. The following describes in detail apparatus side embodiments of this application with reference to FIG. 10 and FIG. 12. It should be understood that descriptions of the apparatus embodiments correspond to the descriptions of the method embodiments. Therefore, for a part that is not described in detail, refer to the foregoing method embodiments.

FIG. 10 is a block diagram of an image file generation apparatus 1000 according to an embodiment of this application. As shown in FIG. 10, the image file generation apparatus 1000 may include a transceiver module 1010 and a processing module 1020. In a possible design, the image file generation apparatus 1000 may implement steps or procedures performed corresponding to the image file generation method in the foregoing method embodiments.

Optionally, the image file generation apparatus 1000 may be used in a server. In some embodiments, the transceiver module 1010 may be configured to receive data of a first image. The data of the first image may include map data. The processing module 1020 may be configured to segment the first image to generate a plurality of tiles. The processing module 1020 may be further configured to generate a first image file based on the plurality of tiles, where the first image file includes: a first data structure area, configured to store a file header of an image file, where the file header indicates a file type; a second data structure area, configured to store data of a second image, where the data of the second image includes data of the plurality of tiles; and a third data structure area, configured to store offsets of the plurality of tiles in the data of the second image, where the offsets of the plurality of tiles indicate storage locations of data of the plurality of tiles in the data of the second image.

Based on an image file including the data structure areas that is generated by the image file generation apparatus 1000, the terminal device can request only a tile corresponding to a target image in the image file, and an original image does not need to be fully downloaded. This helps alleviate a problem of slow loading of a cloud image and improve browsing efficiency.

In some implementations, the processing module 1020 may be further configured to resample the plurality of tiles to generate a multi-level tile, where the second image may include the multi-level tile.

In some implementations, for a plurality of homogeneous tiles in a first tile, the second data structure area may store only data of a feature tile in the plurality of homogeneous tiles, offsets that correspond to the plurality of homogeneous tiles and that are in the third data structure area may be set to be the same, and the same offsets corresponding to the plurality of homogeneous tiles may indicate a location of the data of the feature tile in the second data structure area.

Optionally, the third data structure area may be adjacent to the first data structure area. In some implementations, the third data structure area may include a tag, and the tag may include an index code and an offset that are of each tile in the second image.

In some implementations, the second data structure area may further store data of an original image and/or data of a first thumbnail, where the first thumbnail includes an image obtained through resampling based on the original image. Further, the third data structure area may further store the data of the original image and/or an offset corresponding to the data of the first thumbnail.

Further, the first thumbnail may include a multi-level thumbnail, and the multi-level thumbnail may include a plurality of images having different resolutions obtained by performing resampling a plurality of times based on the original image.

In some implementations, the processing module 1020 may be further configured to compress the data of the second image in the third data structure area. It should be noted that, after compression, an offset of each image changes, and therefore the offset in the third data structure area also needs to be updated.

In some implementations, the processing module 1020 may be specifically configured to: define a projection coordinate system for the original image; define a coordinate reference level for the original image based on the projection coordinate system; and segment the original image based on the coordinate reference level to obtain the plurality of tiles.

FIG. 11 is a block diagram of an image processing apparatus 1100 according to an embodiment of this application. As shown in FIG. 11, the image processing apparatus 1100 may include a transceiver module 1110 and a processing module 1120. The transceiver module 1110 may communicate with the outside, the processing module 1120 is configured to process data, and the transceiver module 1110 may also be referred to as a communication interface.

In a possible design, the image processing apparatus 1100 may implement steps or procedures performed by the server (namely, the cloud-side device) in the foregoing method embodiments. The processing module 1120 may be configured to perform processing-related operations of the server in the foregoing image processing method embodiments, and the transceiver module 1110 may be configured to perform receiving and sending-related operations of the server in the foregoing image processing method embodiments.

In some embodiments, the transceiver module 1110 may be configured to receive a first data request from a terminal device, where the first data request is used to request data of a first target image in a first image file, the first image file includes a second data structure area, the second data structure area includes data of a second image, the data of the second image includes data of a plurality of tiles, the plurality of tiles include an image obtained through segmentation based on a first image, and the first target image includes one or more tiles in the second image. The processing module 1120 may be configured to obtain the data of the first target image from the first image file based on the first data request. The transceiver module 1110 may be further configured to send the data of the first target image to the terminal device.

Based on the foregoing embodiments, the image processing apparatus 1100 can receive, through the transceiver module 1110, the first data request sent by the terminal device, and the processing module 1120 can obtain, based on the first data request, the one or more tiles included in the first target image, and send the tiles to the terminal device, so that the terminal device does not need to fully download an original image. This can significantly alleviate a problem of slow loading of a cloud image, improve browsing efficiency, and further reduce a data transmission amount.

In a possible design, the image processing apparatus 1100 may implement steps or procedures performed by the terminal device in the foregoing method embodiments. The processing module 1120 may be configured to perform processing-related operations of the terminal device in the foregoing image processing method embodiments, and the transceiver module 1110 may be configured to perform receiving and sending-related operations of the terminal device in the foregoing image processing method embodiments.

In some implementations, the transceiver module 1110 may be configured to send a first data request to a server, where the first data request is used to request data of a first target image in a first image file, the first image file includes a second data structure area, the second data structure area includes data of a second image, the second image includes a plurality of tiles, the plurality of tiles include an image obtained through segmentation based on data of a first image, and the first target image includes one or more tiles in the second image. The transceiver module 1110 may be further configured to receive the data of the first target image from the server. The processing module 1120 may be configured to display the first target image based on the data of the first target image.

Based on the foregoing solution, the image processing apparatus can send the first data request to the server through the transceiver module 1110, to request the first target image in the first image file in the server, and then the server obtains, based on the first data request, the one or more tiles included in the first target image, so that an original image does not need to be fully downloaded. After the transceiver module 1110 receives data of the first target image from the server, the processing module 1120 displays the first target image based on the data of the first target image. This can significantly alleviate a problem of slow loading of a cloud image, improve browsing efficiency, and further reduce a data transmission amount.

This application further provides a computing device 1200. As shown in FIG. 12, the computing device 1200 includes a bus 1202, a processor 1204, a memory 1206, and a communication interface 1208. The processor 1204, the memory 1206, and the communication interface 1208 communicate with each other through the bus 1202. The computing device 1200 may be a server or a terminal device. It should be understood that quantities of processors and memories in the computing device 1200 are not limited in this application.

The bus 1202 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one line in FIG. 12. However, this does not indicate that there is only one bus or only one type of bus. The bus 1202 may include a path for transmitting information between components (for example, the memory 1206, the processor 1204, and the communication interface 1208) of the computing device 1200.

The processor 1204 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1206 may include a volatile memory (volatile memory), for example, a random access memory (random access memory, RAM). The processor 1204 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1206 stores executable program code, and the processor 1204 executes the executable program code to separately implement functions of the transceiver module and the processing module, so as to implement the image file generation method or the image processing method. In other words, the memory 1206 stores instructions used to perform the image file generation method or the image processing method.

The communication interface 1208 uses a transceiver module, for example, but not limited to, a network interface card or a transceiver, to implement communication between the computing device 1200 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device like a desktop computer, a notebook computer, or a smartphone.

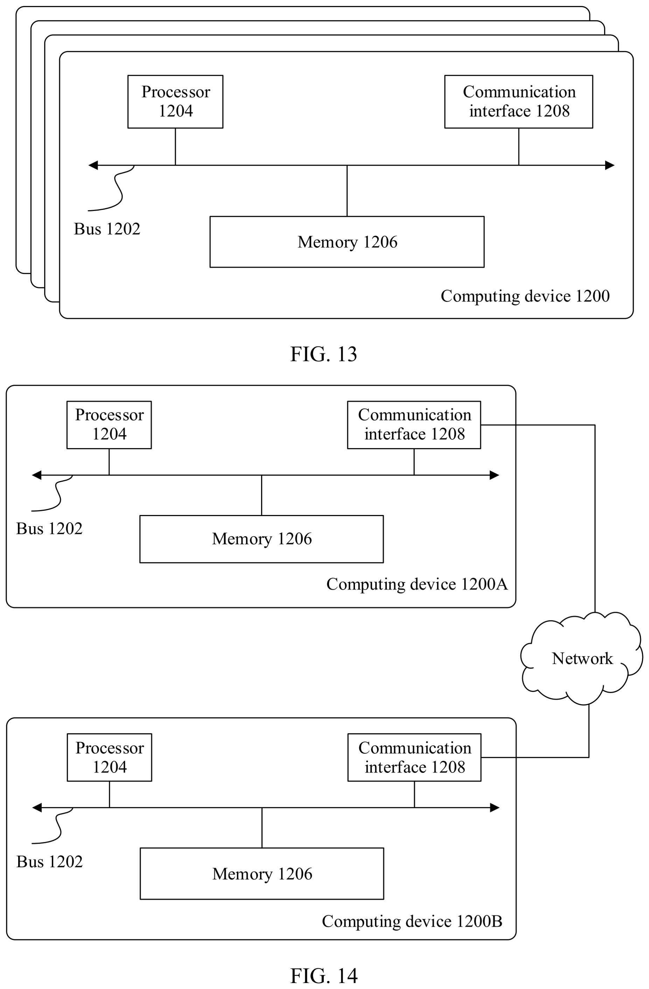

As shown in FIG. 13, the computing device cluster includes at least one computing device 1200. The memory 1206 in the at least one computing device 1200 in the computing device cluster may store same instructions used to perform the image file generation method or the image processing method.

In some possible implementations, the memory 1206 in the at least one computing device 1200 in the computing device cluster may alternatively separately store some instructions used to perform the image file generation method or the image processing method. In other words, a combination of the at least one computing device 1200 may jointly execute the instructions used to perform the image file generation method or the image processing method.

It should be noted that memories 1206 in different computing devices 1200 in the computing device cluster may store different instructions, which are respectively used to perform some functions of the image file generation method or the image processing method. In other words, the instructions stored in the memories 1206 in the different computing devices 1200 may implement functions of one or more of the processing module and the transceiver module.

In some possible implementations, the at least one computing device in the computing device cluster may be connected through a network. The network may be a wide area network, a local area network, or the like. FIG. 14 shows a possible implementation. As shown in FIG. 14, two computing devices 1200A and 1200B are connected through a network. Specifically, each computing device is connected to the network through a communication interface in the computing device. In this possible implementation, the memory 1206 in the computing device 1200A stores instructions for performing a function of a task triggering module.

It should be understood that functions of the computing device 1200A shown in FIG. 14 may alternatively be completed by the plurality of computing devices 1200. Similarly, functions of the computing device 1200B may alternatively be completed by the plurality of computing devices 1200.

An embodiment of this application further provides a chip. The chip includes a processor and a data interface. The processor reads, through the data interface, instructions stored in a memory, to perform the image file generation method or the image processing method.

An embodiment of this application further provides a computer program product including instructions. The computer program product may be software or a program product that includes the instructions and that can be run on a computing device or stored in any usable medium. When the computer program product is run on at least one computing device, the at least one computing device is enabled to perform the image file generation method or the image processing method.

An embodiment of this application further provides a computer-readable storage medium. The computer-readable storage medium may be any usable medium accessible by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the image file generation method or the image processing method.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes various media that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image file generation method, wherein the method comprises:
obtaining data of a first image, wherein the data of the first image comprises map data;
segmenting the first image to generate a plurality of tiles; and
generating a first image file based on the plurality of tiles, wherein the first image file comprises:
a first data structure area, configured to store a file header of the first image file, wherein the file header indicates a file type of the first image file;
a second data structure area, configured to store data of a second image, wherein the data of the second image comprises data of the plurality of tiles; and
a third data structure area, configured to store offsets of the plurality of tiles, wherein the offsets of the plurality of tiles indicate storage locations of the data of the plurality of tiles in the second data structure area.

2. The method according to claim 1, wherein the method further comprises:
resampling the plurality of tiles to generate a multi-level tile, wherein the second image comprises the multi-level tile.

3. The method according to claim 1 or 2, wherein for a plurality of homogeneous tiles in the plurality of tiles, the data of the second image in the second data structure area comprises data of a feature tile in the plurality of homogeneous tiles, and the homogeneous tile is a tile whose proportion of same pixels with the feature tile reaches a predetermined threshold.

4. The method according to claim 3, wherein offsets that correspond to the plurality of homogeneous tiles and that are stored in the third data structure area are the same, and the same offsets of the plurality of homogeneous tiles indicate a storage location of the feature tile in the second data structure area.

5. The method according to any one of claims 1 to 4, wherein the third data structure area is adjacent to the first data structure area in the first image file.

6. The method according to any one of claims 1 to 5, wherein the third data structure area comprises a tag, and the tag comprises an index code and an offset that are of each tile in the second image.

7. The method according to any one of claims 1 to 6, wherein the second image further comprises the first image and/or a first thumbnail, and the first thumbnail comprises an image obtained through resampling based on the first image; and
the third data structure area further comprises an offset corresponding to the first image and/or the first thumbnail.

8. The method according to claim 7, wherein the first thumbnail comprises a multi-level thumbnail, and the multi-level thumbnail comprises a plurality of images having different resolutions obtained by performing resampling a plurality of times based on the first image.

9. The method according to any one of claims 1 to 8, wherein the first image file further comprises:
a fourth data structure area, wherein the fourth data structure area is configured to store specific attributes of the plurality of tiles, and a size of the specific attribute is greater than a specific threshold.

10. The method according to any one of claims 1 to 9, wherein the method further comprises:
defining a projection coordinate system for the first image;
defining a coordinate reference level for the first image based on the projection coordinate system; and
segmenting the first image based on the coordinate reference level to obtain the plurality of tiles.

11. An image processing method, wherein the method comprises:
receiving a first data request from a terminal device, wherein the first data request is used to request data of a first target image in a first image file, the first image file comprises a second data structure area, the second data structure area comprises data of a second image, the second image comprises a plurality of tiles, the plurality of tiles comprise an image obtained through segmentation based on a first image, and the first target image comprises one or more tiles in the second image;
obtaining the data of the first target image from the first image file based on the first data request; and
sending the data of the first target image to the terminal device.

12. The method according to claim 11, wherein the second image comprises a multi-level tile, and the multi-level tile comprises a plurality of different levels of tiles obtained by performing resampling a plurality of times based on the plurality of tiles; and
the first target image specifically comprises one or more tiles at a same level in the multi-level tile.

13. The method according to claim 11 or 12, wherein the first image file further comprises a third data structure area, the third data structure area is configured to store offsets of data of the plurality of tiles in the second image, and the offsets indicate storage locations of the data of the plurality of tiles in the second image in the second data structure area.

14. The method according to claim 13, wherein for a plurality of homogeneous tiles in the plurality of tiles, the data of the second image in the second data structure area comprises data of a feature tile in the plurality of homogeneous tiles, and the homogeneous tile is a tile whose proportion of same pixels with the feature tile reaches a predetermined threshold.

15. The method according to claim 14, wherein offsets that correspond to the plurality of homogeneous tiles and that are stored in the third data structure area are the same, and the same offsets of the plurality of homogeneous tiles indicate a storage location of the feature tile in the second data structure area.

16. The method according to any one of claims 13 to 15, wherein the obtaining the data of the first target image from the first image file based on the first data request comprises:
determining the first target image based on the first data request;
determining, based on the first target image, a first tile corresponding to the first target image;
obtaining first offset, wherein the first offset is an offset of the first tile; and
obtaining data of the first tile based on the first offset; and
the sending the data of the first target image to the terminal device comprises:
sending the data of the first tile to the terminal device.

17. The method according to any one of claims 13 to 15, wherein the first data request comprises a first offset, and the first offset is an offset of a first tile corresponding to the first target image;
the obtaining the data of the first target image from the first image file based on the first data request comprises:
obtaining the first tile based on the first offset; and
the sending the data of the first target image to the terminal device comprises:
sending data of the first tile to the terminal device.

18. The method according to any one of claims 13 to 17, wherein before receiving the first data request from the terminal device, the method further comprises:
receiving a second data request from the terminal device, wherein the second data request is used to request the third data structure area of the first image file;
obtaining the third data structure area based on the second data request; and
sending the third data structure area to the terminal device.

19. The method according to any one of claims 13 to 18, wherein the first image file further comprises a first data structure area, the first data structure area comprises a file header of the first image file, the file header indicates a file type, and the third data structure area is adjacent to the first data structure area in the first image file.

20. The method according to any one of claims 13 to 19, wherein the third data structure area comprises a tag, and the tag comprises an index code and the offset that are of each tile in the second image.

21. The method according to any one of claims 13 to 20, wherein the second image further comprises the first image and/or a first thumbnail, and the first thumbnail comprises an image obtained through resampling based on the first image; and
the third data structure area further comprises an offset corresponding to data of the first image and/or data of the first thumbnail.

22. The method according to claim 21, wherein the first thumbnail comprises a multi-level thumbnail, and the multi-level thumbnail comprises a plurality of images having different resolutions obtained by performing resampling a plurality of times based on the first image.

23. The method according to any one of claims 11 to 22, wherein the first image file further comprises:
a fourth data structure area, wherein the fourth data structure area is configured to store specific attributes of the plurality of tiles, and a size of the specific attribute is greater than a specific threshold.

24. An image processing method, wherein the method comprises:
sending a first data request to a server, wherein the first data request is used to request data of a first target image in a first image file, the first image file comprises a second data structure area, the second data structure area comprises data of a second image, the second image comprises a plurality of tiles, the plurality of tiles comprise an image obtained through segmentation based on a first image, and the first target image comprises one or more tiles in the second image;
receiving the data of the first target image from the server; and
displaying the first target image based on the data of the first target image.

25. The method according to claim 24, wherein the second image comprises a multi-level tile, and the multi-level tile comprises a plurality of different levels of tiles obtained by performing resampling a plurality of times based on the plurality of tiles; and
the first target image specifically comprises one or more tiles at a same level in the multi-level tile.

26. The method according to claim 24 or 25, wherein the first image file further comprises a third data structure area, the third data structure area is configured to store offsets of data of the plurality of tiles, and the offsets indicate storage locations of data of the plurality of tiles in the second data structure area.

27. The method according to claim 26, wherein for a plurality of homogeneous tiles in the plurality of tiles, the data of the second image in the second data structure area comprises data of a feature tile in the plurality of homogeneous tiles, and the homogeneous tile is a tile whose proportion of same pixels with the feature tile reaches a predetermined threshold.

28. The method according to claim 27, wherein offsets that correspond to the plurality of homogeneous tiles and that are stored in the third data structure area are the same, and the same offsets of the plurality of homogeneous tiles indicate a storage location of the feature tile in the second data structure area.

29. The method according to any one of claims 26 to 28, wherein the first data request comprises a first offset, the first offset is an offset of a first tile, and the first tile comprises one or more tiles corresponding to the first target image.

30. The method according to claim 29, wherein before sending the first data request to the server, the method further comprises:
sending a second data request to the server, wherein the second data request is used to request the third data structure area of the first image file;
receiving the third data structure area from the server; and
determining the first offset based on the third data structure area.

31. The method according to any one of claims 24 to 30, wherein before sending the first data request to the server, the method further comprises:
obtaining an image access request, wherein the image access request is used to request to display the first target image in the first image; and
determining the first target image based on the image access request.

32. The method according to claim 31, wherein the determining the first target image comprises:
determining a level and pixel coordinates of the first target image based on the image access request; and
determining the first target image based on the level and the pixel coordinates of the first target image.

33. The method according to any one of claims 29 to 30, wherein the third data structure area comprises a tag, and the tag comprises an index code and the offset that are of each tile in the second image; and
the determining the first offset based on the third data structure area comprises:
obtaining an index code of a tile of the first target image; and
searching the third data structure area based on the index code of the tile of the first target image, to determine the first offset.

34. The method according to any one of claims 24 to 33, wherein the first image file further comprises a first data structure area, the first data structure area comprises a file header of the first image file, the file header indicates a file type, and the third data structure area is adjacent to the first data structure area in the first image file.

35. The method according to any one of claims 30 to 33, wherein the data of the second image in the second data structure area further comprises data of the first image and/or data of a first thumbnail, and the first thumbnail comprises an image obtained through resampling based on the data of the first image; and
the third data structure area further comprises an offset corresponding to the data of the first image and/or the data of the first thumbnail.

36. The method according to claim 35, wherein the first thumbnail comprises a multi-level thumbnail, and the multi-level thumbnail comprises a plurality of images having different resolutions obtained by performing resampling a plurality of times based on the first image.

37. An image file generation apparatus, wherein the apparatus comprises:
a transceiver module, configured to receive data of a first image, wherein the data of the first image comprises map data; and
a processing module, configured to segment the first image to generate a plurality of tiles, wherein
the processing module is further configured to generate a first image file based on the plurality of tiles, wherein the first image file comprises:
a first data structure area, configured to store a file header of the first image file, wherein the file header indicates a file type;
a second data structure area, configured to store data of a second image, wherein the data of the second image comprises data of the plurality of tiles; and
a third data structure area, configured to store offsets of the plurality of tiles in the data of the second image, wherein the offsets of the plurality of tiles indicate storage locations of data of the plurality of tiles in the data of the second image.

38. An image processing apparatus, wherein the apparatus comprises:
a transceiver module, configured to receive a first data request from a terminal device, wherein the first data request is used to request data of a first target image in a first image file, the first image file comprises a second data structure area, the second data structure area comprises data of a second image, the data of the second image comprises data of a plurality of tiles, the plurality of tiles comprise an image obtained through segmentation based on a first image, and the first target image comprises one or more tiles in the second image; and
a processing module, configured to obtain the data of the first target image from the first image file based on the first data request, wherein
the transceiver module is further configured to send the data of the first target image to the terminal device.

39. An image processing apparatus, wherein the apparatus comprises:
a transceiver module, configured to send a first data request to a server, wherein the first data request is used to request data of a first target image in a first image file, the first image file comprises a second data structure area, the second data structure area comprises data of a second image, the second image comprises a plurality of tiles, the plurality of tiles comprise an image obtained through segmentation based on data of a first image, and the first target image comprises one or more tiles in the second image, wherein
the transceiver module is further configured to receive the data of the first target image from the server; and
a processing module, configured to display the first target image based on the data of the first target image.

40. A computing device cluster, comprising at least one computing device, wherein each computing device comprises a processor and a memory; and
the processor of the at least one computing device is configured to execute instructions stored in the memory in the at least one computing device, so that the computing device cluster performs the method according to any one of claims 1 to 10, or 11 to 23, or 24 to 36.

41. A computer-readable storage medium, comprising computer program instructions, wherein when the computer program instructions are run by a computing device cluster, the computing device cluster is enabled to perform the method according to any one of claims 1 to 10, or 11 to 23, or 24 to 36.

42. A computer program product comprising instructions, wherein when the instructions are run by a computing device cluster, the computing device cluster is enabled to perform the method according to any one of claims 1 to 10, or 11 to 23, or 24 to 36.

43. A cloud-side device, comprising at least one processor, wherein the at least one processor is coupled to at least one memory, and the at least one processor is configured to execute a computer program or instructions stored in the at least one memory, so that the cloud-side device performs the method according to any one of claims 1 to 10, or 11 to 23.

44. A device-side device, comprising at least one processor, wherein the at least one processor is coupled to at least one memory, and the at least one processor is configured to execute a computer program or instructions stored in the at least one memory, so that the device-side device performs the method according to any one of claims 24 to 36.

45. A device-cloud collaboration system, comprising the cloud-side device according to claim 43 and the device-side device according to claim 44.
